# EUROPEAN PATENT SPECIFICATION

(11) **EP 0 819 935 B1**
(45) Date of publication and mention of the grant of the patent: **31.03.1999**
(21) Application number: 96111696.9
(22) Date of filing: 19.07.1996
(51) Int. Cl.: G01N 27/16

(54) **A catalytic gas sensor element**
Katalytisches Gassensorelement
Elément de capteur catalytique de gaz

(43) Date of publication of application: 21.01.1998
(73) Proprietor: FRAUNHOFER-GESELLSCHAFT ZUR FÖRDERUNG DER ANGEWANDTEN FORSCHUNG E.V., 80636 München (DE); DAIMLER-BENZ AG, 85521 Ottobrunn (DE); SCHLUMBERGER INDUSTRIES, F-92542 Montrouge Cédex (FR)
(72) Inventor: Drost, Stephan, Dr. Ing., 81241 München (DE); Lang, Walter, Dr. Ing., 81371 München (DE); Steiner, Peter, Dipl.-Phys., 86529 Schrobenhausen (DE); Endres, Hanns-Erik, Dr. Ing., 80649 München (DE); Krenkow, Angelika, 81371 München (DE); Müller, Gerhard, Dr., 85567 Grafing (DE); Hellmich, Wolfgang, 81379 München (DE); Beguin, Bernard, 69720 Saint Laurent de Mure (FR); Primet, Michel, 69140 Rillieux le Pape (FR); Manguin-Fritsch, Agnes, 92340 Bourg-la-Reine (FR); Suski, Jan, 92160 Antony (FR)
(74) Representative: Schoppe, Fritz, Dipl.-Ing.

(56) References cited:
- EP-A- 0 446 483
- EP-A- 0 703 449
- US-A- 4 416 911
- US-A- 5 421 958
- J.ELECTROCHEM.SOC., vol. 143, no. 2, February 1996, pages 683-687, XP000609067 C.DÜCSÖ ET AL.: "Deposition of Tin Oxide into Porous Silicon by Atomic Layer Epitaxy"
- POROUS SILICON AND RELATED MATERIALS. SYMPOSIUM F AT THE E-MRS SPRING CONFERENCE 1994, STRASBOURG, FRANCE, 24-27 MAY 1994, vol. 255, no. 1-2, ISSN 0040-6090, THIN SOLID FILMS, 15 JAN. 1995, SWITZERLAND, pages 52-58, XP002019132 STEINER P ET AL: "Micromachining applications of porous silicon"

## Description

The present invention refers to a catalytic gas sensor element used for a qualitative and quantitative detection of gases.

Catalytic gas sensors are known, which include noble metals with the aid of which potentially present gases are detected qualitatively and quantitatively. For this purpose, a catalyst, normally a noble metal, is applied to a carrier, e.g. a membrane. The other side of the carrier has arranged thereon heating and detection elements. The heating elements are used for the purpose of heating the catalyst to a specific temperature. If a gas is present in the atmosphere surrounding the noble metal, said gas will react with the catalyst, whereby an increase in temperature will be caused. This increase in temperature is then detected by means of a temperature detection element. If a resistor is used as a heating element, e.g. a thin film resistor applied to the carrier in the form of a meander, this resistor, whose resistivity changes as the temperature changes, can also be used as a temperature detection element.

Catalytic gas sensors of the type described hereinbefore show little stability and high poisoning and ageing effects in addition to other disadvantages.

EP-A-0446483 relates to a catalytic gas sensor comprising a diaphragm supported by a support structure of silicon. On a main surface of the diaphragm opposite to the support structure, a catalytically active layer is provided for detecting the presence of a gas. In addition, heating means are provided in order to warm up different portions of the active layer to different temperatures. Temperature sensing means are provided for sensing the temperature of the different portions.

EP-A-0703449 relates to a catalytic calorimetric gas sensor including a sol-gel processed washcoat and sol-processed catalytically active metal particels deposited on the washcoat with high surface area and controlled porosity which increases the sensitivity, durability and reproducibility of the sensor. In accordance with this prior art sensor, a membrane having a low thermal conductivity is supported by a silicon frame on one main surface thereof. Temperature measuring layers are provided on the second surface of the membrane. The temperature measuring layers are covered by a passivation layer. On top of the temperature measuring layers catalytic layers are provided which are separated from the temperature measuring layers by the passivation layer.

It is an object of the present invention to provide a method of producing a catalytic gas sensor element showing a high stability, little poisoning and ageing effects as well as a high sensitivity.

This object is achieved by a method according to claim 1.

It is a further object of the present invention to provide a catalytic gas sensor showing a high stability, little poisoning and ageing effects as well as a high sensitivity.

This object is achieved by a catalytic gas sensor element according to claim 10.

The detection element of the catalytic gas sensor according to the present invention which consists of a microporous material has preferably a large surface, and this results in high sensitivity and stability and little poisoning and ageing effects. It follows that less easily oxidized molecules, e.g. methane, can be detected. A carrier, to which the detection element is attached, is preferably a silicon free membrane, and, therefore, less heat is lost and power consumption is low. A catalytic gas sensor element according to the present invention can preferably be produced by means of micromachining techniques. The specific features resulting from this type of production are batch processing, easy arraying, a high sensitivity and a speedy response.

In the following, preferred embodiments of the present invention will be explained in detail making reference to the drawings enclosed, in which:
- Fig. 1: shows a perspective view of a catalytic gas sensor element according to the present invention;
- Fig. 2: shows the representation of a measurement of methane by means of a catalytic gas sensor element according to the present invention;
- Fig. 3: shows production steps of a first embodiment of a method according to the present invention used for producing a catalytic gas sensor element; and
- Fig. 4: shows production steps of a second embodiment used for producing a catalytic gas sensor element according to the present invention.

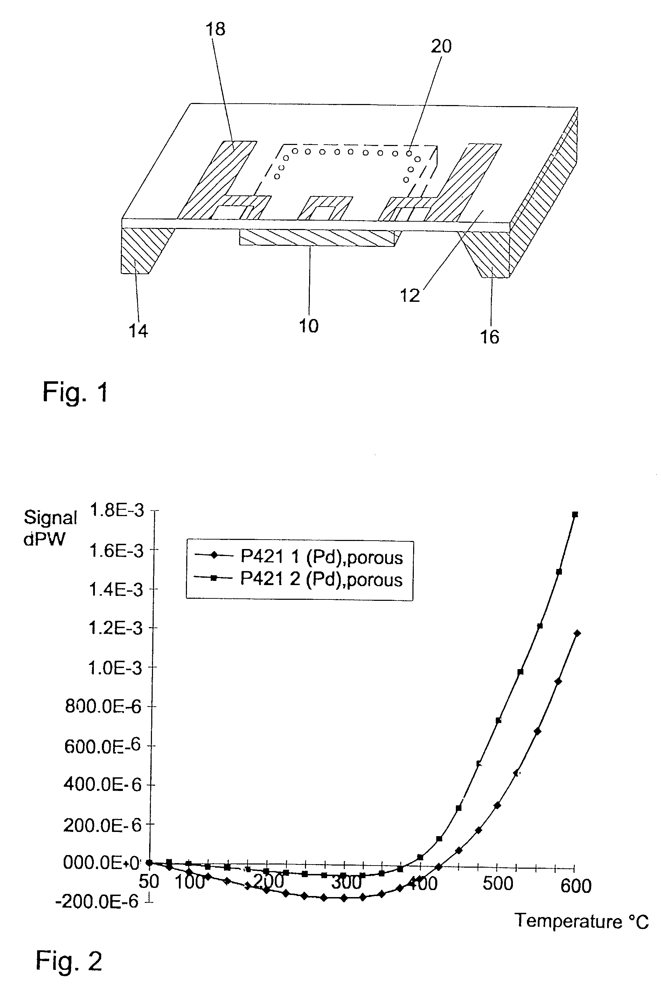

Fig. 1 shows a preferred embodiment of a catalytic gas sensor element according to the present invention, which is adapted to be produced by means of micromachining techniques. A detection element 10 is attached to the bottom side of a carrier membrane 12. The detection element 10 of the preferred embodiment consists of a microporous p-type silicon block, the bottom side of which is impregnated with a catalytically active noble metal. The membrane 12 of the preferred embodiment consists of silicon carbide. The bottom side of said membrane 12 has additionally attached thereto holding means 14, 16; the holding means of the preferred embodiment consists of a frame out of silicon and are produced during the micromachining of the catalytic gas sensor element, as will be explained hereinbelow.

The top side of the membrane 12 of the preferred embodiment has provided thereon metallic resistance structures 18, which are used for heating the detection element 10 as well as for temperature measurement. The metallic structures 18 can be applied to the membrane 12 e.g. in the form of a meander. The resistance structures may, for example, only comprise one resistance film used as a heating element and also as a temperature detection element. Furthermore, the resistance structures may comprise two resistance films, one of said resistance films being used as a heating element and the other one as a temperature detection element. In addition, contact holes are arranged in the membrane 12, said contact holes being used for electrically connecting the microporous silicon block 10 to the wafer frame 14, 16 provided on the membrane 12 by metallic structures on the upper side of the wafer.

In the following, the mode of operation of the above-described catalytic gas sensor element or pellistor will be described. The microporous block is heated to an elevated temperature (e.g. 200 - 600°C). A gas, which is to be detected, is adsorbed at the huge inner surface of the microporous silicon block; in the course of this process, a combustion reaction takes place. This reaction produces heat, and this has the effect that the temperature of the detection element 10 rises. This rise in the temperature of the detection element 10 is detected by detecting changes in the resistivity of the resistance structures 18 arranged on said membrane 12, said changes in the resistivity being caused by a temperature change. In this way, qualitative and quantitative detection of gases is possible.

In view of the fact that the porous silicon block has a large surface at which the reaction takes place - a property that results in high sensitivity, in high stability and little poisoning and ageing effects - less easily oxidized molecules can be detected. Fig. 2 shows the detection characteristics of two catalytic gas sensor elements according to the present invention including palladium as a catalytically active noble metal in the porous silicon block. Because silicon carbide is used for the membrane of the preferred embodiment little heat is lost and power consumption is low. A frame consisting of silicon 14, 16 holds the membrane.

If a burnable gas, such as CO, methane, alcohols, etc. is present in the air surrounding the porous silicon block 10, this gas will be burnt by the catalytically active material - metal and insulator material - at the heated porous silicon block 10. The resultant heat is correlated with the gas concentration.

The heated part is thermally isolated from a holder, e.g. the holding means 14 and 16. In accordance with the preferred embodiment, this is achieved by attaching the heated part, i.e. the porous silicon block 10, to a thermally isolating membrane. The frame holding this membrane is either fixed to a header, or it is held by bonding wires, or it is secured in position in some other way known in the field of technology. The thermally isolating membrane can consist e.g. of SiC (silicon carbide), Si₃N₄, SiO₂, thin Si or another material. Also slits can be provided in the membrane for further reduction of the heat conductivity. The thermal isolation of the heated part can also be achieved by holding said heated part by bonding wires, some other material, or by means of a micromachined chip.

The porous silicon block 10 is produced making use of known methods of producing microporous silicon structures which make use of a hydrofluoric acid. The porous silicon block is then heated so as to stabilize it and so as to produce OH groups on the surface thereof. The stabilization of the silicon is done by oxidation of Si to SiOₓ. In this way, OH groups are obtained at the surface of the silicon. The surface treated in this way is impregnated by a precursor of a catalytically active noble metal so as to obtain in said porous silicon block a deposit of palladium with high dispersion. Further, other processes of depositing metals in the porous material are possible. The metal used as a catalytically active noble metal can e.g. be palladium, platinum, iridium or a mixture of these materials. A p-type silicon is preferably used as a microporous material because of the pore size after the formation of the porous layer. Microporous silicon having a pore size in the nanometer region has the lowest thermal conductivity and the highest transformation rates of CH₄ into CO₂ and H₂O. Furthermore, palladium, for example, is able to penetrate porous silicon films up to depths of at least 10 µm.

The process for introducing palladium in a porous medium, such as porous silicon, is known and is described, for example in the article "Infrared Study of Oxidized and Reduced Palladium Loaded Zeolits" by M. Primet and Y. Ben Taarit in *Journal of Physical Chemistry,* 1977, 81, 1317.

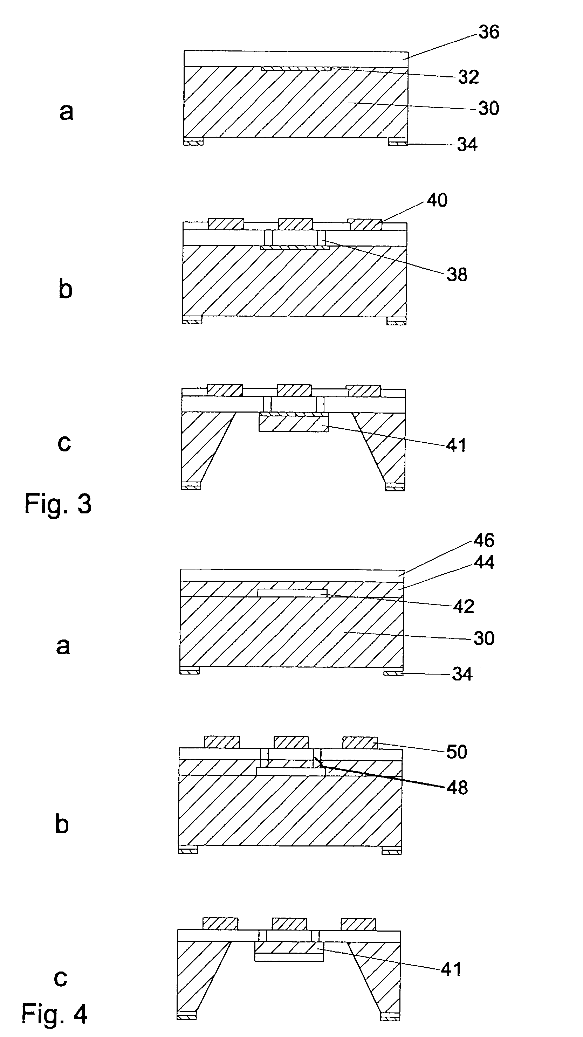

Making reference to Fig. 3 and 4, two methods of producing the silicon block 10 will be explained hereinbelow by way of example. In accordance with the first embodiment, the silicon block is realized by electrochemical etch stop, whereas according to the second method the silicon block is realized by oxide etch stop. After the production of the silicon block the porous layer is formed and the impregnation is carried out.

Fig. 3a shows a first phase of the production of the silicon block by means of electrochemical etch stop. A p-type silicon substrate 30, e.g. a 4 inch wafer having a resistivity of 5 - 10 Ωcm, is used as a source material. In a main surface of the substrate 30 a 200 nm deep n-implantation 32 is carried out. Subsequently, an LPCVD oxide and nitride layer (LPCVD = Low Pressure Chemical Vapour Deposition) is formed on the whole surface of the substrate 30. On the lower surface of the substrate 30, i.e. the surface which is located opposite the surface in which the n-implantation 32 has been carried out, the oxide/nitride layer is structured by photolithography and dry etching methods, whereby a structured oxide/ nitride layer 34 is obtained. On the opposite side, the oxide/nitride layer is removed, whereupon a silicon carbide layer 36 is applied.

As can be seen in Fig. 3b, contact holes 38 reaching down to said n-implantation 32 are etched through this silicon carbide layer 36. Subsequently, a contact material, e.g. aluminum, is evaporated into said contact holes 38, whereby a contact will be established between the n-implantation and the wafer frame. Following this, a metal, e.g. platinum or gold, is applied by vapour deposition and structured such that the desired structure 40, e.g. a meander, is obtained.

Subsequently, the substrate 30 is etched electrochemically in KOH (potassium hydroxide solution) or in TMAH. This will result in the structure shown in Fig. 3c. In connection with this etching, the thin n-implantation 32 and the low etch stop voltage applied thereto are of importance. The remaining silicon block is, consequently, p-type (5-10 Ωcm, 5 µm), and the frame of the silicon carbide membrane is silicon free.

Following this, the p-type silicon block is treated in the manner described hereinbefore so as to obtain the detection element consisting of a microporous silicon and the catalytically active noble metal contained therein.

Fig. 4 shows an alternative method of producing the silicon block 10. The source material is again a p-type silicon substrate 30. In correspondence with the previously described embodiment, a structured oxide/nitride layer is produced on the bottom side of the silicon substrate 30. On the top side of the substrate 30, the nitride layer is removed, and the oxide layer is structured by photolithography and dry etching methods so as to form an oxide etch stop 42. Following this, an LPCVD polysilicon layer is applied to the top side of the substrate 30. Alternatively, it is also possible to apply a silicon wafer with a recess to the top side of the substrate 30 and to connect it thereto. Furthermore, the oxide etch stop 42 could also be produced by implanting an oxide into the silicon substrate (SOI).

In a subsequent step, a PECVD silicon carbide 46 is applied to the layer 44 by chemical vapour deposition. The silicon carbide layer 46 has again formed therein, e.g. by means of a dry etching method, contact holes 48 extending into in the vapour-deposited or bonded silicon layer 44. Following this, resistance structures 50 are applied to the silicon carbide layer 46 by vapour deposition.

The substrate 30 is then etched anisotropically from the bottom side; during this etching process, the oxide 42 acts as an etch stop. The structure shown in Fig. 4c is obtained as a result of said etching process. When the oxide 42 has been removed, the above-mentioned steps are carried out so as to produce from said silicon block 10 a porous silicon block in which a catalytically active noble metal is contained.

The membrane 12 used as a carrier in the case of the present invention consists preferably of SiC, Si₃N₄, SiO₂ or thin silicon. The catalytically active noble metal is preferably palladium, platinum, iridium or a mixture of these materials. The material used as microporous material is preferably silicon, silicon dioxide or some other silicon compound. The heating and temperature detection means applied to the membrane may comprise thermoelectric couples in addition to the above-mentioned thin film resistors consisting preferably of platinum or gold, with and without adhesion layers like Ni, Cr, NiCr, Ti, etc.. To achieve a good bonding additional metal layers can be arranged on the metal layers used for the heating and temperature detecting elements.

It follows that the present invention provides a catalytic gas sensor element by means of which less easily oxidized molecules can be detected, which consumes little power and which shows a high sensitivity as well as a speedy response. The present invention can be used for gas sensing for different purposes, e.g. in warning devices, and for the purpose of leakage detection, control of working areas, process control and gas analysis.

## Claims

1. A method of producing a catalytic gas sensor element, comprising the following steps:
forming a mask layer (34) on a first main surface of a silicon substrate (30), the silicon substrate (30) being provided with an etch stop (32; 42) in a predetermined positional relation to a second main surface thereof;
forming a thermally isolating layer (12; 36; 46) on the second main surface of said silicon substrate (30);
forming a heating and temperature detecting means (18) on said thermally isolating layer (12; 36; 46);
etching the silicon substrate (30) from said first surface thereof making use of said mask layer (34) and said etch stop (32; 42) in order to produce a carrier structure (16) and, separately therefrom, a silicon block (41) on said thermally isolating layer;
treating the silicon block (41) so as to produce a block consisting of microporous silicon;
heating the microporous silicon so as to produce OH groups on a surface thereof; and
impregnating the surface of the microporous silicon, on which said OH groups have been produced, with a noble metal precursor.

2. A method according to claim 1, wherein contact holes (38; 48) are produced through said formed thermally isolating layer.

3. A method according to claim 1 or 2, wherein said mask layer (34) is formed by an oxide and nitride layer.

4. A method according to one of the claims 1 to 3, wherein said thermally isolating layer (12; 36; 46) is formed by a silicon carbide layer, a Si₃N₄ layer or a SiO₂ layer.

5. A method according to one of the claims 1 to 4, wherein said heating and temperature detecting means (18) is formed by resistance structures (40; 50).

6. A method according to one of the claims 1 to 5, wherein the etching step comprises electrochemical etching of the silicon substrate (30), an implantation layer (32) being used for producing an etch stop.

7. A method according to one of the claims 1 to 5, wherein the etching step comprises anisotropic etching of the silicon substrate (30), an oxide area (42) arranged in said substrate being used as an etch stop.

8. A method according to one of the claims 1 to 7, wherein the porosity of the catalyst carrier material is produced by electrochemical etching of silicon in HF.

9. A method according to one of the claims 1 to 8, wherein a palladium, a platinum or an iridium precursor is used as a noble metal precursor.

10. An catalytic gas sensor comprising:
a silicon carrier structure (14, 16);
a thermally isolating membrane (12) arranged on said silicon carrier structure (14, 16);
a heating and temperature detection means (18) arranged on said thermally isolating membrane (12) opposite to said silicon carrier structure (14, 16);
a detection element (10) located on said thermally isolating membrane (12) opposite to said heating and temperature detection means (18) and spaced apart from said silicon carrier structure (14, 16), the detection element (10) consisting of a microporous silicon, a microporous silicon dioxide or a microporous silicon compound impregnated with a catalyst; wherein
said silicon carrier structure and said detection element are formed of the same silicon substrate.

11. A catalytic gas sensor according to claim 10, wherein the catalyst is a catalytically active noble metal.

12. A catalytic gas sensor according to claim 10 or 11, wherein the microporous material consists of a p-type silicon.

13. A catalytic gas sensor according to one of the claims 10 to 12, wherein the catalytically active noble metal is palladium, platinum or iridium.

14. A catalytic gas sensor according to one of the claims 10 to 13, wherein said membrane (12) consists of SiC, Si₃N₄ or SiO₂.

15. A catalytic gas sensor according to one of the claims 10 to 14, wherein said heating and temperature detection means (18) comprises a resistance structure used as a heating element and also as a temperature detection element.

16. A catalytic gas sensor according to one of the claims 10 to 15, wherein said heating and temperature detection means (18) comprises two resistance structures, one of said resistance structures being used as a heating element, whereas the other one is used as a temperature detection element.

17. A catalytic gas sensor according to one of the claims 10 to 16, wherein said heating and temperature detection means comprises a thermoelectric couple.

## Patentansprüche

1. Ein Verfahren zum Herstellen eines katalytischen Gassensorelements mit folgenden Schritten:
Bilden einer Maskenschicht (34) auf einer ersten Hauptoberfläche eines Siliziumsubstrats (30), wobei das Siliziumsubstrat (30) mit einem Ätzstop (32; 42) in einer vorbestimmten Positionsbeziehung zu einer zweiten Hauptoberfläche desselben versehen ist;
Bilden einer thermisch isolierenden Schicht (12; 36; 46) auf der zweiten Hauptoberfläche des Siliziumsubstrats (30);
Bilden einer Heiz- und Temperaturerfassungs-Einrichtung (18) auf der thermisch isolierenden Schicht (12; 36; 46);
Ätzen des Siliziumsubstrats (30) von der ersten Oberfläche desselben her unter Verwendung der Maskenschicht (34) und des Ätzstops (32; 42), um eine Trägerstruktur (16) und getrennt von derselben einen Siliziumblock (41) auf der thermisch isolierenden Schicht zu erzeugen;
Behandeln des Siliziumblocks (41), um einen Block zu erzeugen, der aus mikroporösem Silizium besteht;
Erwärmen des mikroporösen Siliziums, um OH-Gruppen auf einer Oberfläche desselben zu erzeugen; und
Imprägnieren der Oberfläche des mikroporösen Siliziums, auf der die OH-Gruppen erzeugt wurden, mit einem Prekursor eines Edelmetalls.

2. Ein Verfahren gemäß Anspruch 1, bei dem Kontaktierungslöcher (38; 48) durch die thermisch isolierende Schicht gebildet werden.

3. Ein Verfahren gemäß Anspruch 1 oder 2, bei dem die Maskenschicht (34) durch eine Oxid- und Nitrid-Schicht gebildet wird.

4. Ein Verfahren gemäß einem der Ansprüche 1 bis 3, bei dem die thermisch isolierende Schicht (12; 36; 46) durch eine Siliziumkarbidschicht, eine Si₃N₄-Schicht oder eine SiO₂-Schicht gebildet wird.

5. Ein Verfahren gemäß einem der Ansprüche 1 bis 4, bei dem die Heiz- und Temperaturerfassung-Einrichtung (18) durch Widerstandsstrukturen (40; 50) gebildet wird.

6. Ein Verfahren gemäß einem der Ansprüche 1 bis 5, bei dem der Ätzschritt das elektrochemische Ätzen des Siliziumsubstrats (30) umfaßt, wobei eine Implantationsschicht (32) zum Erzeugen eines Ätzstops verwendet wird.

7. Ein Verfahren gemäß einem der Ansprüche 1 bis 5, bei dem der Ätzschritt ein anisotropes Ätzen des Siliziumsubstrats (30) umfaßt, wobei ein Oxidbereich (42), der in dem Substrat angeordnet ist, als ein Ätzstop verwendet wird.

8. Ein Verfahren gemäß einem der Ansprüche 1 bis 7, bei dem die Porosität des katalytischen Trägermaterials durch elektrochemisches Ätzen von Silizium in HF erzeugt wird.

9. Ein Verfahren gemäß einem der Ansprüche 1 bis 8, bei dem ein Palladium-, ein Platin- oder ein Iridium-Prekursor als Edelmetall-Prekursor verwendet wird.

10. Ein katalytischer Gassensor mit folgenden Merkmalen:
einer Siliziumträgerstruktur (14, 16);
einer thermisch isolierenden Membran (12), die auf der Siliziumträgerstruktur (14, 16) angeordnet ist;
einer Heiz- und Temperaturerfassungs-Einrichtung (18), die auf der thermisch isolierenden Membran (12) gegenüber der Siliziumträgerstruktur (14, 16) angeordnet ist;
einem Erfassungselement (10), das auf der thermisch isolierenden Membran (12) gegenüber der Heiz- und Temperaturerfassungs-Einrichtung (18) und beabstandet von der Siliziumträgerstruktur (14, 16) angeordnet ist, wobei das Erfassungselement (10) aus mikroporösem Silizium, einem mikroporösen Siliziumdioxid oder einer mikroporösen Siliziumverbindung, die mit einem Katalysator imprägniert ist, besteht; wobei
die Siliziumträgerstruktur und das Erfassungselement aus dem gleichen Siliziumsubstrat gebildet sind.

11. Ein katalytischer Gassensor gemäß Anspruch 10, bei dem der Katalysator ein katalytisch aktives Edelmetall ist.

12. Ein katalytischer Gassensor gemäß Anspruch 10 oder 11, bei dem das mikroporöse Material aus einem p-Typ-Silizium besteht.

13. Ein katalytischer Gassensor gemäß einem der Ansprüche 10 bis 12, bei dem das katalytisch aktive Edelmetall Palladium, Platin oder Iridium ist.

14. Ein katalytischer Gassensor gemäß einem der Ansprüche 10 bis 13, bei dem die Membran (12) aus SiC, Si₃N₄ oder SiO₂ besteht.

15. Ein katalytischer Gassensor gemäß einem der Ansprüche 10 bis 14, bei dem die Heiz- und Temperaturerfassungs-Einrichtung (18) eine Widerstandsstruktur aufweist, die als ein Heizelement und ferner als ein Temperaturerfassungselement verwendet ist.

16. Ein katalytischer Gassensor gemäß einem der Ansprüche 10 bis 15, bei dem die Heiz- und Temperaturerfassungs-Einrichtung (18) zwei Widerstandsstrukturen aufweist, wobei eine der Widerstandsstrukturen als ein Heizelement verwendet ist, wohingegen die andere als ein Temperaturerfassungselement verwendet ist.

17. Ein katalytischer Gassensor gemäß einem der Ansprüche 10 bis 16, bei dem die Heiz- und Temperaturerfassungs-Einrichtung ein Thermoelement aufweist.

## Revendications

1. Procédé pour fabriquer un élément formant capteur catalytique de gaz, comprenant les étapes suivantes consistant à :
◆ former une couche formant masque (34) sur une première surface principale d'un substrat en silicium (30), le substrat en silicium (30) étant pourvu d'un dispositif (32 ; 42) d'arrêt de la corrosion, dans une relation de position prédéterminée par rapport à une seconde surface principale du substrat :
◆ former une couche thermiquement isolante (12 ; 36 ; 46) sur la seconde surface principale dudit substrat en silicium (30);
◆ former des moyens de chauffage et de détection de température (18) sur ladite couche thermiquement isolante (12 ; 36 ; 46) ;
◆ corroder le substrat en silicium (30) à partir de ladite première surface de ce substrat en utilisant ladite couche formant masque (34) et ledit dispositif (32 ; 42) d'arrêt de la corrosion pour produire une structure de support (16) et, séparément de cela, un bloc en silicium (41) sur ladite couche thermiquement isolante ;
◆ traiter le bloc de silicium (41) de manière à produire un bloc constitué par du silicium microporeux ;
◆ chauffer le silicium microporeux de manière à produire des groupes OH au niveau d'une surface de ce silicium ; et
◆ imprégner la surface du silicium microporeux, sur laquelle lesdits groupes OH ont été produits, avec un précurseur formé d'un métal précieux.

2. Procédé selon la revendication 1, selon lequel des trous de contact (38 ; 48) sont produits à travers ladite couche thermiquement isolante.

3. Procédé selon la revendication 1 ou 2, selon lequel ladite couche de masque (34) est formée par une couche d'oxyde et de nitrure.

4. Procédé selon l'une quelconque des revendications 1 à 3, selon lequel ladite couche thermiquement isolante (12 ; 36 ; 46) est formée par une couche de carbure de silicium et une couche de Si₃N₄ ou une couche de SiO₂.

5. Procédé selon l'une des revendications 1 à 4, selon lequel lesdits moyens de chauffage et de détection de température (18) sont formés par des structures à résistances (40 ; 50).

6. Procédé selon l'une des revendications 1 à 5, selon lequel l'étape de corrosion comprend la corrosion électrochimique du substrat en silicium (30), une couche d'implantation (32) étant utilisée pour produire un dispositif d'arrêt de corrosion.

7. Procédé selon l'une des revendications 1 à 5, selon lequel l'étape de corrosion comprend l'étape de corrosion anisotrope du substrat en silicium (30), une zone d'oxyde (42) disposée dans ledit substrat étant utilisée en tant que dispositif d'arrêt de corrosion.

8. Procédé selon l'une des revendications 1 à 7, selon lequel la porosité du matériau de support du catalyseur est produite par corrosion électrochimique du silicium dans du HF.

9. Procédé selon l'une des revendications 1 à 8, selon lequel on utilise comme précurseur formé d'un métal précieux, un précurseur en palladium, un précurseur en platine ou un précurseur en iridium.

10. Capteur catalytique de gaz comprenant :
◆ une structure de support en silicium (14, 16);
◆ un membrane thermiquement isolante (12) disposée sur ladite structure de support en silicium (14, 16) ;
◆ des moyens de chauffage et de détection de température (18) disposés sur ladite membrane thermiquement isolante (12) à l'opposé de ladite structure de support en silicium (14, 16);
◆ un élément de détection (10) situé sur ladite membrane thermiquement isolante (12) à l'opposé desdits moyens de chauffage et de détection de température (18) et à distance de ladite structure de support en silicium (14, 16), l'élément de détection (10) étant constitué par du silicium microporeux, du bioxyde de silicium microporeux ou un composé de silicium microporeux dans lequel est imprégné un catalyseur ;
◆ dans lequel ladite structure de support en silicium et ledit élément de détection sont formés par le même substrat en silicium.

11. Capteur catalytique de gaz selon la revendication 10, dans lequel le catalyseur est un métal précieux ayant une action catalytique.

12. Capteur catalytique de gaz selon la revendication 10 ou 11, dans lequel le matériau microporeux est constitué par du silicium de type p.

13. Capteur catalytique de gaz selon l'une des revendications 10 à 12, dans lequel le métal précieux actif du point de vue catalytique est du palladium, du platine ou de l'iridium.

14. Capteur catalytique de gaz selon l'une des revendications 10 à 13, dans lequel ladite membrane (12) est constituée par du SiO, du Si₃N₄ ou du SiO₂.

15. Capteur catalytique de gaz selon l'une des revendications 10 à 14, dans lequel lesdits moyens de chauffage et de détection de température (18) comprennent une structure à résistance utilisée en tant qu'élément chauffant et également en tant qu'élément de détection de température.

16. Capteur catalytique de gaz selon l'une des revendications 10 à 15, dans lequel lesdits moyens de chauffage et de détection de température (18) comprennent deux structures à résistances, l'une desdites structures à résistance étant utilisée en tant qu'élément chauffant, tandis que l'autre est utilisée en tant qu'élément de détection de température.

17. Capteur catalytique de gaz selon l'une des revendications 10 à 16, dans lequel lesdits moyens de chauffage et de détection de température comprennent un thermocouple.
